# FASCICULE DE BREVET EUROPEEN

(11) **EP 3 123 007 B1**
(45) Date de publication et mention de la délivrance du brevet: **17.10.2018**
(21) Numéro de dépôt: 15717552.2
(22) Date de dépôt: 20.03.2015
(51) Int. Cl.: F02C 3/10, F02C 3/113

(54) **TURBOMOTEUR, HELICOPTERE BIMOTEUR EQUIPE D'UN TEL TURBOMOTEUR ET PROCEDE D'OPTIMISATION DU REGIME DE SUPER-RALENTI A PUISSANCE NULLE D'UN TEL HELICOPTERE BIMOTEUR**
TURBOMOTOR, ZWEIMOTORIGER HUBSCHRAUBER MIT EINEM DERARTIGEN TURBOMOTOR UND VERFAHREN ZUR OPTIMIERUNG DER STANDBY-LEERLAUFDREHZAHL EINES DERARTIGEN ZWEIMOTORIGEN HUBSCHRAUBERS
TURBOSHAFT ENGINE, TWIN-ENGINE HELICOPTER EQUIPPED WITH SUCH A TURBOSHAFT ENGINE, AND METHOD FOR OPTIMISING THE STANDBY-IDLE SPEED OF SUCH A TWIN-ENGINE HELICOPTER

(30) Priorité: 27.03.2014 FR 1452645
(43) Date de publication de la demande: 01.02.2017
(73) Titulaire: Safran Helicopter Engines, 64510 Bordes (FR)
(72) Inventeur: MARCONI, Patrick, F-64110 Gelos (FR); THIRIET, Romain, F-64110 Jurancon (FR); BEDRINE, Olivier, F-64290 Bosdarros (FR)
(74) Mandataire: Gevers & Orès
(86) Numéro de dépôt international: PCT/FR2015/050699
(87) Numéro de publication internationale: WO 2015/145043

(56) Documents cités:
- WO-A1-2009/118298
- WO-A2-2012/059671
- GB-A- 1 201 767
- US-A- 3 660 976
- US-A- 4 870 817

## Description

### 1. Domaine technique de l'invention

L'invention concerne un turbomoteur destiné à équiper un hélicoptère bimoteur. L'invention concerne également un procédé d'optimisation du régime de super-ralenti à puissance nulle d'un tel hélicoptère bimoteur.

### 2. Arrière-plan technologique

Un hélicoptère est en général équipé d'au moins deux turbomoteurs qui fonctionnent à des régimes qui dépendent des conditions de vol de l'hélicoptère. Dans tout le texte qui suit, un hélicoptère est dit en situation de vol de croisière lorsqu'il évolue dans des conditions normales, au cours de toutes les phases du vol, hors phases transitoires de décollage, d'atterrissage ou de vol stationnaire. Dans tout le texte qui suit, un hélicoptère est dit en situation critique de vol lorsqu'il est nécessaire qu'il dispose de la puissance totale installée, c'est-à-dire dans les phases transitoires de décollage, de montée, d'atterrissage et de régime dans lequel un des turbomoteurs est défaillant, désigné par l'acronyme anglais OEI (*One Engine Inoperative*)*.*

Il est connu que lorsque l'hélicoptère est en situation de vol de croisière, les turbomoteurs fonctionnent à des niveaux de puissance faibles, inférieures à leur puissance maximale continue (ci-après, PMC). Dans certaines configurations (vitesses d'avancement inférieures à la vitesse maximale, hélicoptère ne volant pas à la masse maximale, etc.), la puissance fournie par les turbomoteurs lors d'un vol de croisière, peut être inférieure à 50 % de la puissance maximale de décollage (ci-après, PMD). Ces faibles niveaux de puissance entraînent une consommation spécifique (ci-après, Cs) définie comme le rapport entre la consommation horaire de carburant par la chambre de combustion du turbomoteur et la puissance mécanique fournie par ce turbomoteur, supérieure de l'ordre de 30% à la Cs de la PMD, et donc une surconsommation en carburant en vol de croisière.

Enfin, lors des phases d'attente au sol, les pilotes préfèrent généralement mettre les différents turbomoteurs au ralenti sol afin d'être sûrs de pouvoir les redémarrer. Les turbomoteurs continuent alors de consommer du carburant bien qu'ils ne fournissent aucune puissance.

D'autre part, les turbomoteurs sont également surdimensionnés pour pouvoir assurer le vol dans tout le domaine de vol spécifié par l'avionneur et notamment le vol à des altitudes élevées et par temps chaud. Ces points de vol, très contraignants, notamment lorsque l'hélicoptère a une masse proche de sa masse maximale de décollage, ne sont rencontrés que dans certains cas d'utilisation de certains hélicoptères. De ce fait, certains turbomoteurs, bien que dimensionnés pour pouvoir fournir de telles puissances ne voleront jamais dans de telles conditions.

Ces turbomoteurs surdimensionnés sont pénalisants en termes de masse et de consommation de carburant. Afin de réduire cette consommation en vol de croisière ou en attente au sol, il est possible d'arrêter l'un des turbomoteurs et de le placer en régime, dit de veille. Le ou les moteurs actifs fonctionnent alors à des niveaux de puissance plus élevés pour fournir toute la puissance nécessaire et donc à des niveaux de Cs plus favorables. Cependant, cette pratique est contraire aux règles de certification actuelles, et les turbomoteurs ne sont pas conçus pour garantir un taux de fiabilité de redémarrage compatible avec les normes de sûreté. De même, les pilotes ne sont actuellement pas sensibilisés ni familiarisés avec la perspective de mettre en veille un turbomoteur en vol.

Un turbomoteur d'hélicoptère comprend de manière connue un générateur de gaz et une turbine libre alimentée par le générateur de gaz pour fournir de la puissance. Le générateur de gaz se compose classiquement de compresseurs d'air en lien avec une chambre de combustion de carburant dans l'air comprimé qui délivrent des gaz chauds à des turbines de détente partielle de gaz qui entraînent en rotation les compresseurs via des arbres d'entraînement. Lez gaz entraînent ensuite la turbine libre de transmission de puissance. La turbine libre transmet la puissance au rotor de l'hélicoptère par le biais d'une boite de transmission.

Les demandeurs ont proposé dans les demandes FR1151717 et FR1359766, des procédés d'optimisation de la consommation spécifique des turbomoteurs d'un hélicoptère par la possibilité de placer au moins un turbomoteur dans un régime de vol stabilisé, dit continu, et au moins un turbomoteur dans un régime de veille particulier duquel il peut sortir de manière urgente ou normale, selon les besoins. Une sortie du régime de veille est dite normale lorsqu'un changement de situation de vol impose l'activation du turbomoteur en veille, par exemple lorsque l'hélicoptère va passer d'une situation de vol de croisière à une phase d'atterrissage. Une telle sortie de veille normale s'effectue sur une durée de 10s à 1 min. Une sortie du régime de veille est dite urgente lorsqu'une panne ou un déficit de puissance du moteur actif intervient ou que les conditions de vol deviennent soudainement difficiles. Une telle sortie de veille d'urgence s'effectue sur une durée inférieure à 10s.

Les demandeurs ont notamment proposé les deux régimes de veille suivants :
- un régime de veille, dit super-ralenti usuel, dans lequel la chambre de combustion est allumée et l'arbre du générateur de gaz tourne à une vitesse comprise entre 20 et 60% de la vitesse nominale,
- un régime de veille, dit super-ralenti assisté, dans lequel la chambre de combustion est allumée et l'arbre du générateur de gaz tourne, assisté mécaniquement, à une vitesse comprise entre 20 et 60% de la vitesse nominale.

Le régime de super-ralenti usuel est pénalisé par des températures de fonctionnement qui deviennent de plus en plus élevées à mesure que l'on cherche à atteindre un ralenti de plus en plus bas.

Le régime de super-ralenti assisté permet de pallier ce problème de température de fonctionnement. Cela étant, il impose le recours à une machine d'entraînement, électrique ou pneumatique et d'un couplage correspondant.

Aussi, il se pose maintenant le problème technique d'obtenir un régime de super-ralenti qui ne soit pas assisté mécaniquement mais qui ne soit pas limité par les températures du turbomoteur. Il se pose donc le problème technique de fournir un turbomoteur permettant de proposer un tel régime de super-ralenti amélioré.

Des documents US 3,660,976 et GB 1 201 767, d'autres turbomoteurs à turbine libre sont connus.

### 3. Objectifs de l'invention

L'invention vise à fournir un turbomoteur qui puisse présenter un régime de super ralenti, dans lequel la chambre de combustion est allumée et l'arbre du générateur de gaz tourne à une vitesse comprise entre 20 et 60% de la vitesse nominale, qui ne soit ni pénalisé par les températures de fonctionnement du turbomoteur, ni assisté mécaniquement par un dispositif d'entraînement externe.

L'invention vise donc à fournir un turbomoteur qui puisse présenter un nouveau régime de super ralenti.

L'invention vise aussi à fournir un hélicoptère bimoteur comprenant au moins un turbomoteur selon l'invention.

L'invention vise aussi à fournir un procédé d'optimisation du régime de super-ralenti à puissance nulle d'un hélicoptère bimoteur selon l'invention comprenant au moins un turbomoteur selon l'invention.

### 4. Exposé de l'invention

Pour ce faire, l'invention concerne un turbomoteur comprenant un générateur de gaz adapté pour être mis en rotation et une turbine libre entraînée en rotation par les gaz dudit générateur de gaz, caractérisé en ce qu'il comprend un dispositif de couplage mécanique spontané dudit générateur de gaz et de ladite turbine libre comprenant au moins une roue libre reliant un premier arbre présentant avec ledit générateur de gaz un rapport de réduction K1 et un deuxième arbre présentant avec la turbine libre un rapport de réduction K2, ladite roue libre étant agencée de telle sorte que ladite turbine libre entraine spontanément ledit générateur de gaz, par le biais desdits arbres et de ladite roue libre, dès que le rapport de la vitesse de rotation dudit générateur de gaz par la vitesse de rotation de ladite turbine libre est inférieur au rapport K2/K1.

Un turbomoteur selon l'invention permet donc de forcer l'entrainement du générateur de gaz par la turbine libre lorsque des conditions prédéterminées sont atteintes. En d'autres termes, un turbomoteur selon l'invention équipé d'un dispositif de couplage mécanique spontané du générateur de gaz et de la turbine libre permet de basculer automatiquement, sans dispositif d'assistance et/ou de commande extérieure, le turbomoteur d'une configuration dite de turbines libres à une configuration dite de turbines liées.

Un turbomoteur selon l'invention peut donc être placé dans un régime de super ralenti au cours duquel la turbine libre entraîne le générateur de gaz, ce qui permet de diminuer les températures des parties chaudes du turbomoteur et de réduire la consommation de carburant.

En outre, le fonctionnement en turbines liées au voisinage du ralenti améliore les performances transitoires, en particulier en cas de chute de tours du rotor lors d'une mise de pas rapide. En effet, le générateur de gaz tourne alors à une vitesse supérieure à sa vitesse nécessaire à puissance nulle en mode turbine libre. Le moteur produit donc très rapidement une puissance conséquente sur la turbine libre, correspondant à la valeur qu'aurait le turbomoteur à turbine libre à cette vitesse, augmentée de la puissance supplémentaire due au fait qu'on atteint rapidement la limite d'accélération, avant même que la turbine à gaz ait commencé à accélérer.

Dans tout le texte, le terme « arbre » désigne un moyen adapté pour être mis en rotation et pour transmettre un couple. Il peut donc s'agir d'un arbre s'étendant longitudinalement, mais également d'un simple pignon d'engrenage.

Les rapports de réduction K1 et K2 sont choisis de telle sorte que lorsque le rapport de la vitesse de rotation du générateur de gaz par la vitesse de rotation de la turbine libre est supérieur au rapport K2/K1, le turbomoteur est dans la configuration de turbines libres, le générateur de gaz et la turbine libre n'étant pas mécaniquement liés. Dès que le rapport de la vitesse de rotation du générateur de gaz par la vitesse de rotation de la turbine libre devient inférieur au rapport K2/K1, la turbine libre entraîne en rotation le générateur de gaz, et le turbomoteur bascule dans une configuration de turbines liées.

Avantageusement et selon l'invention, ledit dispositif de couplage mécanique spontané est adapté pour lier mécaniquement et spontanément ledit générateur de gaz et ladite turbine libre dès que ledit rapport des vitesses est inférieur au rapport K2/K1 et pour séparer spontanément ledit générateur de gaz et ladite turbine libre dès que ledit rapport des vitesses est supérieur au rapport K2/K1.

Avantageusement et selon l'invention, le turbomoteur comprend une génératrice-démarreur solidaire d'un arbre intermédiaire et ledit dispositif de couplage comprend deux roues libres reliant respectivement ledit arbre intermédiaire avec ledit premier arbre présentant avec ledit générateur de gaz un rapport de réduction K1 et ledit deuxième arbre présentant avec la turbine libre un rapport de réduction K2, lesdites roues étant agencées de telle sorte que ladite turbine libre entraîne spontanément ledit générateur de gaz, par le biais desdits arbres et desdites roues libres, dès que ledit rapport des vitesses est inférieur au rapport K2/K1.

L'invention concerne également un hélicoptère bimoteur comprenant au moins un turbomoteur selon l'invention.

L'invention concerne également un procédé d'optimisation du régime de super-ralenti à puissance nulle d'un hélicoptère bimoteur comprenant au moins un turbomoteur comprenant un générateur de gaz adapté pour être mis en rotation et une turbine libre entraînée en rotation par les gaz dudit générateur de gaz, caractérisé en qu'il comprend une étape de couplage mécanique spontané dudit générateur de gaz et de ladite turbine libre en reliant par le biais d'une roue libre un premier arbre présentant avec ledit générateur de gaz un rapport de réduction K1 et un deuxième arbre présentant avec la turbine libre un rapport de réduction K2, ladite roue libre étant agencée de telle sorte que ladite turbine libre entraîne spontanément ledit générateur de gaz dès que ledit rapport des vitesses est inférieur au rapport K2/K1.

Avantageusement et selon l'invention, le couplage mécanique est obtenu en reliant par le biais d'une roue libre un premier arbre présentant avec ledit générateur de gaz un rapport de réduction K1 et un deuxième arbre présentant avec la turbine libre un rapport de réduction K2, ladite roue libre étant agencée de telle sorte que ladite turbine libre entraîne spontanément ledit générateur de gaz dès que ledit rapport des vitesses est inférieur au rapport K2/K1.

Avantageusement et selon l'invention, le couplage mécanique est obtenu en reliant par le biais de deux roues libres un arbre intermédiaire solidaire d'une génératrice-démarreur respectivement audit premier arbre présentant avec ledit générateur de gaz un rapport de réduction K1 et audit deuxième arbre présentant avec la turbine libre un rapport de réduction K2, lesdites roues étant agencées de telle sorte que ladite turbine libre entraîne spontanément ledit générateur de gaz dès que ledit rapport des vitesses est inférieur au rapport K2/K1.

L'invention concerne également un turbomoteur, un hélicoptère et un procédé d'optimisation du régime de super-ralenti à puissance nulle, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un turbomoteur selon un premier mode de réalisation de l'invention,
- la figure 2 est une vue schématique d'un turbomoteur selon un deuxième mode de réalisation de l'invention.

### 6. Description détaillée d'un mode de réalisation de l'invention

Un turbomoteur selon l'invention comprend, tel que représenté sur les figures, un générateur 5 de gaz et une turbine libre 6 alimentée par le générateur 5 de gaz. Un générateur 5 de gaz comprend de manière connue au moins un compresseur d'air 7 en liaison avec une chambre de combustion 8 d'un carburant dans l'air comprimé qui délivre des gaz chauds et au moins une turbine 9 de détente partielle des gaz qui entraîne en rotation le compresseur 7 via un arbre 10 d'entraînement. Les gaz entraînent ensuite la turbine libre 6 de transmission de puissance. Cette turbine libre 6 comprend un arbre 11 de transmission de puissance reliée à une boite de transmission de puissance, non représentée sur les figures, par le biais d'une roue libre 12. Cette roue libre 12 permet d'empêcher qu'un blocage mécanique du turbomoteur entraîne un blocage mécanique de la boite de transmission de puissance et par extension du rotor de l'hélicoptère sur lequel ce turbomoteur est monté.

Un turbomoteur selon l'invention comprend en outre un dispositif 20 de couplage mécanique du générateur 5 de gaz et de la turbine libre 6 adapté pour lier mécaniquement et spontanément le générateur de gaz 5 et la turbine libre 6 dès que le rapport de la vitesse de rotation de l'arbre 10 du générateur de gaz 5 par la vitesse de rotation de l'arbre 11 de la turbine libre 6 est inférieur à une valeur seuil prédéterminée et pour séparer spontanément le générateur de gaz 5 et la turbine libre 6 dès que le rapport est supérieur à cette valeur seuil prédéterminée.

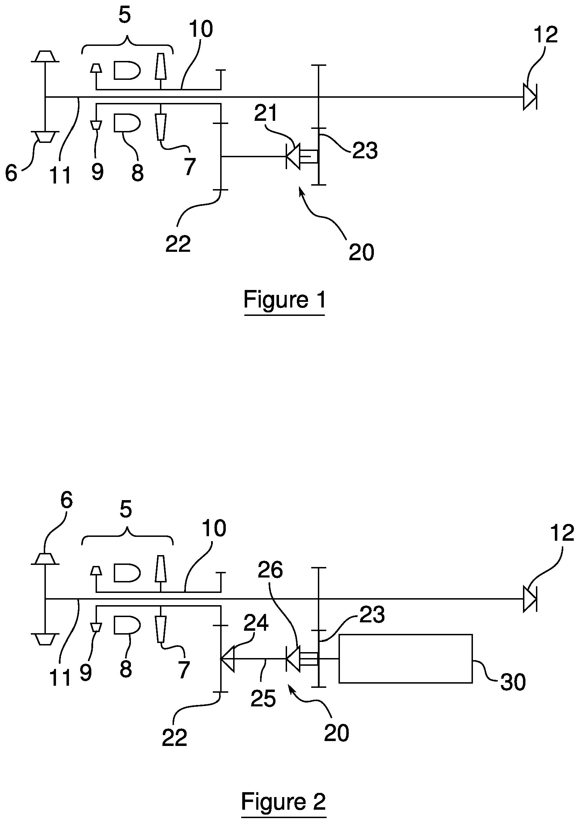

Selon un premier mode de réalisation et tel que représenté sur la figure 1, ce dispositif 20 de couplage comprend un arbre 22 relié mécaniquement à l'arbre 10 du générateur de gaz 5. Ces arbres 22 et 10 présentent entre eux un rapport de réduction K1.

Le dispositif 20 de couplage comprend en outre un arbre 23 relié mécaniquement à l'arbre 11 de la turbine libre 6. Ces arbres 23 et 11 présentent entre eux un rapport de réduction K2.

Le dispositif 20 comprend en outre une roue libre 21 agencée entre les arbres 22 et 23.

Dès lors, la vitesse de rotation de l'arbre 22 est égale à K1.NGG, où NGG est la vitesse de rotation de l'arbre 10 du générateur 5 de gaz.

La vitesse de rotation de l'arbre 23 est égale à K2.NTL, où NTL est la vitesse de rotation de l'arbre 11 de la turbine libre 6.

La roue libre 21 est orientée de telle sorte que l'arbre 23 peut entraîner l'arbre 22 par l'intermédiaire de cette roue libre 21.

Si la vitesse de rotation de l'arbre 23 est inférieure à la vitesse de rotation de l'arbre 22, les deux arbres sont indépendants. Sinon, les deux arbres sont liés.

Autrement dit, les arbres sont indépendants si l'équation suivante est respectée : K2.NTL < K1.NGG. Les arbres sont donc indépendants si le rapport NGG/NTL > K2/K1.

Si le rapport de vitesse est inférieur ou égal à K2/K1, alors un couple moteur est transmis de la turbine libre 6 vers le générateur 5 de gaz.

Autrement dit, le dispositif 20 de couplage décrit en lien avec la figure 1 permet de lier mécaniquement et spontanément le générateur 5 de gaz et la turbine libre 6 dès que le rapport NGG/NTL est inférieur ou égal à K2/K1, qui fait donc office de valeur seuil prédéterminée. Le dispositif permet aussi de séparer spontanément le générateur 5 de gaz et la turbine libre 6 dès que le rapport NGG/NTL devient supérieur à K2/K1.

Selon un mode de réalisation, les valeurs de K1 et K2 sont respectivement de 0.2567 et 0.2725.

Selon un deuxième mode de réalisation et tel que représenté sur la figure 2, le turbomoteur comprend en outre une génératrice-démarreur 30. Dans ce cas, le dispositif de couplage comprend en plus des arbres 22 et 23 décrits en lien avec la figure 1, un arbre 25 intermédiaire solidaire de la génératrice-démarreur 30.

Le dispositif 20 de couplage comprend en outre une première roue libre 26 qui relie l'arbre 25 intermédiaire avec l'arbre 23. Il comprend en outre une seconde roue libre 24 qui relie l'arbre 25 intermédiaire avec l'arbre 22.

De la même manière que pour le mode de réalisation de la figure 1, la vitesse de rotation de l'arbre 22 est égale à K1.NGG et la vitesse de rotation de l'arbre 23 est égale à K2.NTL.

Les roues libres 26, 24 sont orientées de telle sorte que l'arbre 25 intermédiaire solidaire de la génératrice-démarreur 30 est adapté pour entraîner l'arbre 22, et l'arbre 23 est adapté pour entrainer l'arbre 25 intermédiaire solidaire de la génératrice-démarreur 30.

Les deux roues libres 26, 24 entraînent simultanément si le rapport NGG/NTL est égal à K2/K1.

Si le rapport NGG/NTL est inférieur ou égal à K2/K1, alors les arbres 10, 11 sont mécaniquement liés et un couple moteur est transmis de la turbine libre 6 vers le générateur 5 de gaz.

Si le rapport NGG/NTL est supérieur à K2/K1, alors les arbres sont mécaniquement indépendants.

La génératrice-démarreur 30 est soit entraînée par la turbine libre (cas d'une fonction génératrice) ou entraîne le générateur de gaz (cas d'une fonction démarreur). Le dispositif assure donc aussi la fonction de commutation automatique GG-TL (Générateur de Gaz - Turbine Libre) consistant à coupler la génératrice-démarreur 30 avec le générateur de gaz lors du démarrage et avec l'arbre 11 de la turbine libre lors du fonctionnement en génératrice.

Autrement dit, le dispositif 20 de couplage décrit en lien avec la figure 2 permet également de lier mécaniquement et spontanément le générateur de gaz 5 et la turbine libre 6 dès que le rapport NGG/NTL est inférieur ou égal à K2/K1. Le dispositif permet aussi de séparer spontanément le générateur de gaz 5 et la turbine libre 6 dès que le rapport NGG/NTL devient supérieur à K2/K1. En outre, dans ce mode de réalisation, la fonction génératrice et/ou démarreur est possible.

L'invention concerne également un procédé d'optimisation du régime de super-ralenti à puissance nulle d'un hélicoptère bimoteur comprenant au moins un turbomoteur selon l'un des modes de réalisation décrit.

Un tel procédé comprend donc une étape de couplage mécanique spontané du générateur 5 de gaz et de la turbine libre 6 dès que le rapport de la vitesse de rotation du générateur de gaz par la vitesse de rotation de la turbine libre atteint la valeur K2/K1.

Un procédé selon l'invention est avantageusement mis en oeuvre par un turbomoteur selon l'un des modes de réalisation décrits. Un turbomoteur selon l'un des modes de réalisation décrits met avantageusement en oeuvre un procédé selon l'invention.

## Revendications

1. Turbomoteur comprenant un générateur (5) de gaz adapté pour être mis en rotation et une turbine libre (6) entraînée en rotation par les gaz dudit générateur (5) de gaz, **caractérisé en ce qu'**il comprend un dispositif (20) de couplage mécanique spontané dudit générateur de gaz (5) et de ladite turbine libre (6) comprenant au moins une roue libre (21) reliant un premier arbre (22) présentant avec ledit générateur de gaz un rapport de réduction K1 et un deuxième arbre (23) présentant avec la turbine libre (6) un rapport de réduction K2, ladite roue libre (21) étant agencée de telle sorte que ladite turbine libre (6) entraine spontanément ledit générateur de gaz (5), par le biais desdits arbres et de ladite roue libre (21), dès que le rapport de la vitesse (NGG) de rotation dudit générateur de gaz (5) par la vitesse (NTL) de rotation de ladite turbine libre est inférieur au rapport K2/K1.

2. Turbomoteur selon la revendication 1, **caractérisé en ce que** ledit dispositif (20) de couplage mécanique spontané est adapté pour lier mécaniquement et spontanément ledit générateur de gaz (5) et ladite turbine libre (6) dès que ledit rapport des vitesses est inférieur au rapport K2/K1 et pour séparer spontanément ledit générateur de gaz (5) et ladite turbine libre (6) dès que ledit rapport des vitesses est supérieur au rapport K2/K1.

3. Turbomoteur selon l'une des revendications 1 ou 2, **caractérisé en ce qu'**il comprend une génératrice-démarreur (30) solidaire d'un arbre (25) intermédiaire et **en ce que** ledit dispositif (20) de couplage comprend deux roues libres (24, 26) reliant respectivement ledit arbre (25) intermédiaire avec ledit premier arbre (22) présentant avec ledit générateur de gaz (5) un rapport de réduction K1 et ledit deuxième arbre (23) présentant avec la turbine libre (6) un rapport de réduction K2, lesdites roues (24, 26) étant agencées de telle sorte que ladite turbine libre (6) entraîne spontanément ledit générateur de gaz (5), par le biais desdits arbres et desdites roues libres, dès que ledit rapport (NGG/NTL) des vitesses est inférieur au rapport K2/K1.

4. Hélicoptère bimoteur **caractérisé en ce qu'**il comprend au moins un turbomoteur selon l'une des revendications 1 à 3.

5. Procédé d'optimisation du régime de super-ralenti à puissance nulle d'un hélicoptère bimoteur comprenant au moins un turbomoteur comprenant un générateur de gaz (5) adapté pour être mis en rotation et une turbine libre (6) entraînée en rotation par les gaz dudit générateur de gaz (5), caractérisé en qu'il comprend une étape de couplage mécanique spontané dudit générateur de gaz (5) et de ladite turbine libre (6) en reliant par le biais d'une roue libre (21) un premier arbre (22) présentant avec ledit générateur de gaz (5) un rapport de réduction K1 et un deuxième arbre (23) présentant avec la turbine libre (6) un rapport de réduction K2, ladite roue libre (21) étant agencée de telle sorte que ladite turbine libre (6) entraîne spontanément ledit générateur de gaz (5) dès que ledit rapport (NGG/NTL) des vitesses est inférieur au rapport K2/K1.

6. Procédé d'optimisation selon la revendication 5, **caractérisé en ce que** ledit couplage mécanique est obtenu en reliant par le biais de deux roues libres (23, 24) un arbre (25) intermédiaire solidaire d'une génératrice-démarreur (30) respectivement audit premier arbre (22) présentant avec ledit générateur de gaz (5) un rapport de réduction K1 et audit deuxième arbre (23) présentant avec la turbine libre (6) un rapport de réduction K2, lesdites roues (23, 24) étant agencées de telle sorte que ladite turbine libre (6) entraîne spontanément ledit générateur de gaz (5) dès que ledit rapport (NGG/NTL) des vitesses est inférieur au rapport K2/K1.

## Patentansprüche

1. Turbomotor, umfassend einen Gasgenerator (5), der dafür ausgebildet ist, in Drehung versetzt zu werden, und eine Freilaufturbine (6), die von den Gasen des Gasgenerators (5) drehend angetrieben wird, **dadurch gekennzeichnet, dass** er eine Vorrichtung (20) zum spontanen mechanischen Koppeln des Gasgenerators (5) und der Freilaufturbine (6) umfasst, welche mindestens einen Freilauf (21) umfasst, der eine erste Welle (22), die ein Übersetzungsverhältnis K1 zum Gasgenerator aufweist, und eine zweite Welle (23) verbindet, die ein Übersetzungsverhältnis K2 zur Freilaufturbine (6) aufweist, wobei der Freilauf (21) derart angeordnet ist, dass die Freilaufturbine (6) den Gasgenerator (5) mittels der Wellen und des Freilaufs (21) spontan antreibt, sobald das Verhältnis der Drehzahl (NGG) des Gasgenerators (5) zur Drehzahl (NTL) der Freilaufturbine kleiner ist als das Verhältnis K2/K1.

2. Turbomotor nach Anspruch 1, **dadurch gekennzeichnet, dass** die Vorrichtung (20) zum spontanen mechanischen Koppeln dafür ausgebildet ist, den Gasgenerator (5) und die Freilaufturbine (6) mechanisch und spontan zu verbinden, sobald das Verhältnis der Drehzahlen kleiner ist als das Verhältnis K2/K1, und dafür, den Gasgenerator (5) und die Freilaufturbine (6) spontan zu trennen, sobald das Verhältnis der Drehzahlen größer ist als das Verhältnis K2/K1.

3. Turbomotor nach einem der Ansprüche 1 oder 2, **dadurch gekennzeichnet, dass** er einen Startergenerator (30) umfasst, der fest mit einer Zwischenwelle (25) verbunden ist, und dadurch, dass die Koppelvorrichtung (20) zwei Freiläufe (24, 26) umfasst, die die Zwischenwelle (25) jeweils mit der ersten Welle (22), die ein Übersetzungsverhältnis K1 zum Gasgenerator (5) aufweist, und der zweiten Welle (23) verbindet, die ein Übersetzungsverhältnis K2 zur Freilaufturbine (6) aufweist, wobei die Freiläufe (24, 26) derart angeordnet sind, dass die Freilaufturbine (6) den Gasgenerator (5) mittels der Wellen und der Freiläufe spontan antreibt, sobald das Verhältnis (NGG/NTL) der Drehzahlen kleiner ist als das Verhältnis K2/K1.

4. Zweimotoriger Hubschrauber, **dadurch gekennzeichnet, dass** er mindestens einen Turbomotor nach einem der Ansprüche 1 bis 3 umfasst.

5. Verfahren zum Optimieren des Super-Leerlaufs mit Null Leistung eines zweimotorigen Hubschraubers, der mindestens einen Turbomotor umfasst, welcher einen Gasgenerator (5) umfasst, der dafür ausgebildet ist, in Drehung versetzt zu werden, und eine Freilaufturbine (6), die von den Gasen des Gasgenerators (5) drehend angetrieben wird, **dadurch gekennzeichnet, dass** es einen Schritt des spontanen mechanischen Koppelns des Gasgenerators (5) und der Freilaufturbine (6) umfasst durch Verbinden, mittels eines Freilaufs (21), einer ersten Welle (22), die ein Übersetzungsverhältnis K1 zum Gasgenerator (5) aufweist, und einer zweiten Welle (23), die ein Übersetzungsverhältnis K2 zur Freilaufturbine (6) aufweist, wobei der Freilauf (21) derart angeordnet ist, dass die Freilaufturbine (6) den Gasgenerator (5) spontan antreibt, sobald das Verhältnis (NGG/NTL) der Drehzahlen kleiner ist als das Verhältnis K2/K1.

6. Optimierungsverfahren nach Anspruch 5, **dadurch gekennzeichnet, dass** die mechanische Kopplung erhalten wird durch Verbinden, mittels zwei Freiläufen (23, 24), einer fest mit einem Startergenerator (30) verbundenen Zwischenwelle (25) jeweils mit der ersten Welle (22), die ein Übersetzungsverhältnis K1 zum Gasgenerator (5) aufweist, und mit der zweiten Welle (23), die ein Übersetzungsverhältnis K2 zur Freilaufturbine (6) aufweist, wobei die Freiläufe (23, 24) derart angeordnet sind, dass die Freilaufturbine (6) den Gasgenerator (5) spontan antreibt, sobald das Verhältnis (NGG/NTL) der Drehzahlen kleiner ist als das Verhältnis K2/K1.

## Claims

1. Turboshaft engine comprising a gas generator (5) designed to be rotated and a free turbine (6) rotated by the gases from said gas generator (5), **characterised in that** it comprises a device (20) for the spontaneous mechanical coupling of said gas generator (5) and of said free turbine (6) comprising at least one free wheel (21) connecting a first shaft (22) having with said gas generator a reduction ratio K1 and a second shaft (23) having with the free turbine (6) a reduction ratio K2, said free wheel (21) being arranged in such a way that said free turbine (6) spontaneously drives said gas generator (5), through said shafts and said free wheel (21), once the ratio of the rotation speed (NGG) of said gas generator (5) to the rotation speed (NTL) of said free turbine is less than the K2/K1 ratio.

2. Turboshaft engine according to claim 1, **characterised in that** said device (20) for the spontaneous mechanical coupling is adapted to mechanically and spontaneously connect said gas generator (5) and said free turbine (6) once said ratio of speeds is less than the K2/K1 ratio and to spontaneously separate said gas generator (5) and said free turbine (6) once said ratio of speeds is greater than the K2/K1 ratio.

3. Turboshaft engine according to one of claims 1 or 2, **characterised in that** it comprises a starter-generator (30) integral with an intermediate shaft (25) and **in that** said device (20) for coupling comprises two free wheels (24, 26) respectively connecting said intermediate shaft (25) with said first shaft (22) having with said gas generator (5) a reduction ratio K1 and said second shaft (23) having with the free turbine (6) a reduction ratio K2, said wheels (24, 26) being arranged in such a way that said free turbine (6) spontaneously drives said gas generator (5), through said shafts and said free wheels, once said ratio (NGG/NTL) of the speeds is less than the K2/K1 ratio.

4. Twin-engine helicopter **characterised in that** it comprises at least one turboshaft engine according to one of claims 1 to 3.

5. Method for optimising the zero-power super-idle speed of a twin-engine helicopter comprising at least one turboshaft engine comprising a gas generator (5) designed to be rotated and a free turbine (6) rotated by the gases from said gas generator (5), **characterised in that** it comprises a step of spontaneous mechanical coupling of said gas generator (5) and of said free turbine (6) by connecting through a free wheel (21) a first shaft (22) having with said gas generator (5) a reduction ratio K1 and a second shaft (23) having with the free turbine (6) a reduction ratio K2, said free wheel (21) being arranged in such a way that said free turbine (6) spontaneously drives said gas generator (5) once said ratio (NGG/NTL) of the speeds is less than the K2/K1 ratio.

6. Method for optimising according to claim 5, **characterised in that** said mechanical coupling is obtained by connecting through two free wheels (23, 24) an intermediate shaft (25) integral with a starter-generator (30) respectively to said first shaft (22) having with said gas generator (5) a reduction ratio K1 and to said second shaft (23) having with the free turbine (6) a reduction ratio K2, said wheels (23, 24) being arranged in such a way that said free turbine (6) spontaneously drives said gas generator (5) once said ratio (NGG/NTL) of the speeds is less than the K2/K1 ratio.
